# EUROPÄISCHE PATENTANMELDUNG

(11) **EP 2 431 625 A2**
(43) Veröffentlichungstag der Anmeldung: **21.03.2012**
(21) Anmeldenummer: 11005619.9
(22) Anmeldetag: 08.07.2011
(51) Int. Cl.: F16C 33/78, F16C 33/76, F16J 15/32

(54) **Dichtprofil**

(30) Priorität: 17.09.2010 DE 102010045671
(71) Anmelder: Carl Freudenberg KG, 69469 Weinheim (DE)
(72) Erfinder: Pütt, Georg, 64689 Grasellenbach (DE); Messer, Matthias, Dr., 65193 Wiesbaden (DE); Klein, Katrin, 69469 Weinheim (DE)

(57) **Zusammenfassung**

Dichtungsanordnung, zum Beispiel für Drehkränze von Windrädem, umfassend zwei relativ zueinander verdrehbare erste (1) und zweite Maschinenelemente (2), die einen abzudichtenden Einbauraum (3) für einen Dichtring (4) begrenzen, wobei der Dichtring (4) dichtend innerhalb des Einbauraums (3) angeordnet ist, wobei der Dichtring (4) zumindest einen statischen Dichtbereich (5) aufweist, der durch einen ersten Verankerungswulst (6) mit einer kongruent gestalteten ersten Vertiefung (7) im ersten Maschinenelement (1) formschlüssig verbunden ist und zumindest einen dynamischen Dichtbereich (8) mit zumindest einer ersten Dichtlippe (9), die eine sich in radialer Richtung erstreckende erste Hinterschneidung (10) des zweiten Maschinenelements (2) dichtend berührt und mit zumindest einer zweiten Dichtlippe (11), die mittels eines Stegs (12) mit der ersten Dichtlippe (9) verbunden ist, wobei die zweite Dichtlippe (11) eine Dichtfläche (13) des ersten Maschinenelements (1) dichtend berührt und wobei die beiden Dichtlippen (9, 11) und der Steg (12) im Wesentlichen die Form eines Ankers aufweisen.

Der statische Dichtbereich (5) weist zusätzlich einen zweiten Verankerungswulst (14) auf, der mit einer kongruent gestalteten zweiten Vertiefung (15) im ersten Maschinenelement (1) formschlüssig verbunden ist, wobei die Dichtfläche (13) eine sich In radialer Richtung erstreckende zweite Hinterschneidung (16) aufweist, an die die zweite Dichtlippe (11) dichtend anlegbar ist.

## Beschreibung

### Technisches Gebiet

Die Erfindung betrifft eine Dichtungsanordnung, umfassend zwei relativ zueinander verdrehbare erste und zweite Maschinenelemente, die einen abzudichtenden Einbauraum für einen Dichtring begrenzen, wobei der Dichtring dichtend innerhalb des Einbauraums angeordnet ist, wobei der Dichtring zumindest einen statischen Dichtbereich aufweist, der durch einen ersten Verankerungswulst mit einer kongruent gestalteten ersten Vertiefung im ersten Maschinenelement formschlüssig verbunden ist und zumindest einen dynamischen Dichtbereich mit zumindest einer ersten Dichtlippe, die eine sich in radialer Richtung erstreckende erste Hinterschneidung des zweiten Maschinenelements dichtend berührt und mit zumindest einer zweiten Dichtlippe, die mittels eines Stegs mit der ersten Dichtlippe verbunden ist, wobei die zweite Dichtlippe eine Dichtfläche des ersten Maschinenelements dichtend berührt und wobei die Dichtlippen und der Steg im Wesentlichen die Form eine Ankers aufweisen.

### Stand der Technik

Eine solche Dichtungsanordnung ist aus der WO2009/149810A1 bekannt.

Das vorbekannte Dichtungssystem wird zur Abdichtung von Großwälzlagern verwendet, die insbesondere in Windenergleanlagen zur Anwendung gelangen. Der statische Dichtbereich weist nur einen ersten Verankerungswulst auf, der in einer kongruent gestalteten ersten Vertiefung im ersten Maschinenelement formschlüssig angeordnet ist. Auf der in radialer Richtung gegenüberliegenden Seite des ersten Verankerungswulsts weist der statische Dichtbereich zwei Dichtlippen auf, die einander mit axialem Abstand benachbart zugeordnet sind und die abzudichtende Fläche unter radialer elastischer Vorspannung anliegend berühren.

Entsprechend berührt die zweite Dichtlippe die Dichtfläche des ersten Maschinenelements. Die Dichtfläche erstreckt sich eben In axialer Richtung.

Der Erfindung liegt die Aufgabe zugrunde, eine Dichtungsanordnung der vorbekannten Art derart weiter zu entwickeln, dass wesentlich höhere Drücke sicher abdichtbar sind und dass der Dichtring auch bei großen Durchmessern eine gute Formbeständigkeit aufweist.

### Darstellung der Erfindung

Diese Aufgabe wird erfindungsgemäß durch eine Dichtungsanordnung mit den Merkmalen von Anspruch 1 gelöst. Auf vorteilhafte Ausgestaltungen nehmen die auf Anspruch 1 rückbezogenen Ansprüche Bezug.

Zur Lösung der Aufgabe ist es vorgesehen, dass der statische Dichtbereich zusätzlich einen zweiten Verankerungswulst aufweist , der mit einer kongruent gestalteten zweiten Vertiefung im ersten Maschinenelement formschlüssig verbunden ist und dass die Dichtfläche eine sich in radialer Richtung erstreckende zweite Hinterschneidung aufweist, an die die zweite Dichtlippe dichtend anlegbar ist.

Durch diese Maßnahmen wird erreicht, dass die Dichtungsanordnung nicht nur etwa 4 bar sicher abdichten kann. Durch die besonders haltbare Anordnung des Dichtrings in seinem Einbauraum können auch relative Überdrücke im Einbauraum im Bereich von 10 bar sicher abgedichtet werden, ohne dass die Dichtung aus ihrem Einbauraum herausgedrückt wird. Sowohl der erste und der zweite Verankerungswulst sind formschlüssig im Einbauraum angeordnet, als auch die erste und die zweite Dichtlippe, die durch die erste und die zweite Hinterschneidung auch bei hohen Drücken formschlüssig in ihrer Position gehalten werden. Außerdem wird ein Verkippen des Dichtrings in seinem Einbauraum dadurch verhindert.

Es ist von Vorteil, dass der Dichtring durch seine zuverlässige Fixierung im Einbauraum eine gute Formbeständigkeit aufweist, auch dann, wenn hohe Drücke im Bereich von etwa 10 bar abzudichten sind und/oder der Dichtring große Durchmesser aufweist. Unter großen Durchmessern sind in diesem Fall Durchmesser zu verstehen, die bis zu 4m betragen. Solche großen Durchmesser gelangen zur Abdichtung von Blattlagern in Drehkränzen von Windrädern zur Anwendung.

Durch die gute Formbeständigkeit können außerdem größere Toleranzen der den Einbauraum begrenzenden Maschinenelemente leichter überbrückt werden.

Nach einer vorteilhaften Ausgestaltung kann es vorgesehen sein, dass der erste Verankerungswulst mit der entsprechenden ersten Vertiefung und der zweite Verankerungswulst der entsprechenden zweiten Vertiefung auf einander radial gegenüber liegenden Seiten des statischen Dichtbereichs angeordnet sind. Dadurch wird eine zuverlässige und verkippsichere Festlegung des statischen Dichtbereichs im Einbauraum gewährleistet.

Um die Montage des statischen Dichtbereichs in den Einbauraum zu vereinfachen, sind der erste und der zweite Verankerungswulst und die kongruent ausgebildeten jeweiligen Vertiefungen in axialer Richtung bevorzugt versetzt zu einander angeordnet. Wären die Verankerungswülste in einer Radialebene axial ohne Versatz zu einander angeordnet, wäre die Montage des statischen Dichtbereichs in den Einbauraum wesentlich schwieriger, weil bei der Montage die Gefahr bestehen würde, dass die Verankerungswülste unzulässig stark verformt würden. Dadurch würde die Gefahr bestehen, dass die Verankerungswülste bei der Montage beschädigt werden.

Der Dichtring ist bevorzugt einstückig und materialeinheitlich ausgebildet. Derartige Dichtringe sind einfach und kostengünstig herstellbar und für die meisten Anwendungsfälle gut geeignet.

Der Dichtring kann eine weitere dynamisch beanspruchte dritte Dichtlippe aufweisen, die auf der dem abzudichtenden Einbauraum axial abgewandten Seite der ersten Dichtlippe angeordnet ist. Diese dritte Dichtlippe sorgt zusätzlich zu der ersten und der zweiten Dichtlippe einerseits dafür, dass Verunreinigungen aus der Umgebung sicher aus dem abzudichtenden Raum ferngehalten werden und andererseits abzudichtendes Medium aus dem abzudichtenden Raum nicht am Dichtring vorbei in die Umgebung gelangt.

Das erste Maschinenelement kann durch einen Lageraußenring oder einen Lagerinnenring und das zweite Maschinenelement durch einen Lagerinnenring oder einen Lageaußenring eines Wälzlagers gebildet sein. Der Dichtring dichtet in einem solchen Fall das Innere des Wälzlagers und die Umgebung des Wälzlagers gegeneinander ab. Der Anker, bestehend aus den beiden Dichtlippen und dem Steg, ist durch seine beiden Dichtlippen jeweils hinter einer Hinterschneidung eingerastet und im Inneren des Wälzlagers angeordnet. Verwendung finden kann die Dichtungsanordnung in Drehkränzen von Windrädern, wobei die Wälzlager die Lagerung der Blätter bilden, die in den Drehkränzen, schwenkbar um ihre Längsachse, aufgenommen sind.

### Kurzbeschreibung der Zeichnung

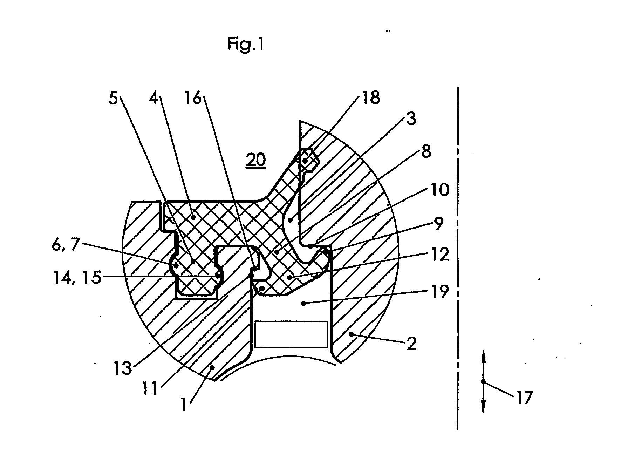

Ein Ausführungsbeispiel wird nachfolgend anhand von Figur 1 näher erläutert.

### Ausführung der Erfindung

In Figur 1 ist ein Ausschnitt einer erfindungsgemäßen Dichtungsanordnung in schematischer Darstellung gezeigt.

Der Dichtring (4), der einstückig und materialeinheitlich ausgebildet ist, ist innerhalb des Einbauraums (3) angeordnet. Der Einbauraum (3) wird durch die beiden relativ zu einander verdrehbaren Maschinenelemente (1, 2) begrenzt, wobei das erste Maschinenelement (1) in dem hier gezeigten Ausführungsbeispiel durch einen Lageraußenring eines Wälzlagers und das zweite Maschinenelement (2) durch einen Lagerinnenring des Wälzlagers gebildet sind.

Der Dichtring (4) ist jeweils formschlüssig sowohl mit seinem statischen Dichtbereich (5) als auch mit seinem dynamischen Dichtbereich (8) innerhalb des Einbauraums (3) angeordnet. Die formschlüssige Verkrallung des statischen Dichtbereichs (5) erfolgt durch den ersten (6) und zweiten Verankerungswulst (14), die jeweils in kongruent gestalteten Vertiefungen (7, 15) des ersten Maschinenelements (1) angeordnet sind. Die Verankerungswulste (6, 14) sind auf einander radial gegenüberliegenden Seiten des statischen Dichtbereichs (5) in axialer Richtung (17) versetzt zueinander angeordnet, so dass der statische Dichtbereich (5) einfacher in den Einbauraum (3) montiert werden kann.

Der dynamische Dichtbereich (8) ist durch die erste Dichtlippe (9) und die zweite Dichtlippe (11) ebenfalls formschlüssig im Einbauraum (3) verkrallt. Die beiden Dichtlippen (9, 11) sind durch den Steg (12) miteinander verbunden.

Zur Funktion der Dichtungsanordnung wird Folgendes ausgeführt:

Der zwischen den beiden Maschinenelementen (1, 2) im Einbauraum (3) eingebaute Dichtring (4) sorgt dafür, dass Schmiermittel während der bestimmungsgemäßen Verwendung innerhalb des abzudichtenden Raums (19) zurückgehalten wird und nicht an dem Dichtring (4) vorbei in die Umgebung (20) gelangt, und zwar auch dann nicht, wenn innerhalb des abzudichtenden Raums (19) relative Überdrücke im Bereich von 10 bar abzudichten sind. Herrschen innerhalb des abzudichtenden Raums (19) relative Überdrücke, bezogen auf die Umgebung (20) wirkt dieser Überdruck auf den Anker, bestehend aus den beiden Dichtlippen (9, 11) und dem Steg (12). Der Anker wird überdruckbedingt in Richtung Umgebung (20) gedrückt, spreizt sich, durch die Ankerform auf, und die beiden Dichtlippen (9, 11) liegen an den jeweiligen Hinterschneidungen (10, 16) des zweiten Maschinenelements (2) und des ersten Maschinenelements (1) an. Dieser Formschluss sorgt zusammen mit dem Formschluss des statischen Dichtbereichs (5) am ersten Maschinenelement (1) dafür, dass der Dichtring (4) auch dann, wenn Überdrücke von zum Beispiel 10 bar innerhalb des abzudichtenden Raums (19) abzudichten sind, nicht aus seinem Einbauraum (3) in die Umgebung (20) heraus gedrückt wird.

Die dritte Dichtlippe (18) sorgt hauptsächlich dafür, dass Verunreinigungen aus der Umgebung (20) nicht in den Einbauraum (3) und in den abzudichtenden Raum (19) eindringen können. Zeichnerisch ist die Überdeckung der dritten Dichtlippe (18) zur entsprechenden abzudichtenden Fläche des zweiten Maschinenelements (2) gezeigt.

## Patentansprüche

1. Dichtungsanordnung, umfassend zwei relativ zueinander verdrehbare erste (1) und zweite Maschinenelemente (2), die einen abzudichtenden Einbauraum (3) für einen Dichtring (4) begrenzen, wobei der Dichtring (4) dichtend innerhalb des Einbauraums (3) angeordnet ist, wobei der Dichtring (4) zumindest einen statischen Dichtbereich (5) aufweist, der durch einen ersten Verankerungswulst (6) mit einer kongruent gestalteten ersten Vertiefung (7) im ersten Maschinenelement (1) formschlüssig verbunden ist und zumindest einen dynamischen Dichtbereich (8) mit zumindest einer ersten Dichtlippe (9), die eine sich in radialer Richtung erstreckende erste Hinterschneidung (10) des zweiten Maschinenelements (2) dichtend berührt und mit zumindest einer zweiten Dichtlippe (11), die mittels eines Stegs (12) mit der ersten Dichtlippe (9) verbunden ist, wobei die zweite Dichtlippe (11) eine Dichtfläche (13) des ersten Maschinenelements (1) dichtend berührt und wobei die beiden Dichtlippen (9, 11) und der Steg (12) im Wesentlichen die Form eines Ankers aufweisen, **dadurch gekennzeichnet, dass** der statische Dichtbereich (5) zusätzlich einen zweiten Verankerungswulst (14) aufweist, der mit einer kongruent gestalteten zweiten Vertiefung (15) im ersten Maschinenelement (1) formschlüssig verbunden ist und dass die Dichtfläche (13) eine sich in radialer Richtung erstreckende zweite Hinterschneidung (16) aufweist, an die die zweite Dichtlippe (11) dichtend anlegbar ist.

2. Dichtungsanordnung nach Anspruch 1, **dadurch gekennzeichnet, dass** der erste Verankerungswulst (6) mit der entsprechenden ersten Vertiefung (7) und der zweite Verankerungswulst (14) mit der entsprechenden zweiten Vertiefung (15) auf einander radial gegenüberliegenden Seiten des statischen Dichtbereichs (5) angeordnet sind.

3. Dichtungsanordnung nach einem der Ansprüche 1 oder 2, **dadurch gekennzeichnet, dass** der erste (6) und der zweite Verankerungswulst (14) und die kongruent ausgebildeten jeweiligen Vertiefungen (7, 15) in axialer Richtung (17) versetzt zueinander angeordnet sind.

4. Dichtungsanordnung nach einem der Ansprüche 1 bis 3, **dadurch gekennzeichnet, dass** der Dichtring (4) einstückig und materialeinheitlich ausgebildet ist.

5. Dichtungsanordnung nach einem der Ansprüche 1 bis 4, **dadurch gekennzeichnet, dass** der Dichtring (4) eine weitere dynamisch beanspruchte dritte Dichtlippe (18) aufweist, die auf der dem abzudichtenden Raum(19) axial abgewandten Seite der ersten Dichtlippe (9) angeordnet ist.

6. Dichtungsanordnung nach einem der Ansprüche 1 bis 5, **dadurch gekennzeichnet, dass** das erste Maschinenelement (1) durch einen Lageraußenring oder einen Lagerinnenring und das zweite Maschinenelement (2) durch einen Lagerinnenring oder einen Lageraußenring eines Wälzlagers gebildet sind.

7. Verwendung einer Dichtungsanordnung nach einem der Ansprüche 1 bis 6 für Drehkränze von Windrädern.
